# EUROPEAN PATENT SPECIFICATION

(11) **EP 3 082 444 B1**
(45) Date of publication and mention of the grant of the patent: **02.10.2019**
(21) Application number: 14818940.0
(22) Date of filing: 16.12.2014
(51) Int. Cl.: A23G 9/32, A23G 9/42, A23G 9/38

(54) **NATURAL ACIDIFICATION OF FROZEN DAIRY DESSERTS USING NATURAL PLANT SOURCES**
NATÜRLICHE ANSÄUERUNG VON GEFRORENEN MILCHDESSERTS MIT NATÜRLICHEN PFLANZENQUELLEN
ACIDIFICATION NATURELLE DE DESSERTS LACTÉS CONGELÉS À L'AIDE DE SOURCES VÉGÉTALES NATURELLES

(30) Priority: 17.12.2013 US 201361917109 P
(43) Date of publication of application: 26.10.2016
(73) Proprietor: Société des Produits Nestlé S.A., 1800 Vevey (CH)
(72) Inventor: BUNCE, Matthew Galen, Glen Burnie, Maryland 21061 (US); DAVE, Rajiv Indravadan, Bakersfield, CA 93311 (US)
(74) Representative: Elleby, Gudrun
(86) International application number: PCT/EP2014/077998
(87) International publication number: WO 2015/091510

(56) References cited:
- EP-A1- 1 342 418
- EP-A1- 2 206 438
- WO-A1-2004/032643
- WO-A1-2010/092091
- WO-A1-2012/016816
- WO-A1-2012/016853
- WO-A1-2012/016854
- WO-A1-2014/102182
- DE-A1-102009 048 534
- ES-A1- 2 166 725
- FR-A1- 2 188 967
- NL-C1- 1 004 105
- US-A- 4 118 521
- US-A- 5 338 554
- US-A1- 2006 088 627
- US-A1- 2009 263 556

## Description

### Technical field

The present invention relates to a frozen confection product. In particular the present invention relates to a frozen confection product comprising natural acidifying agent. Furthermore, the invention relates to a method of producing an aerated frozen confection product comprising natural acidifying agent, as well as a frozen confection product obtainable by said method.

### Background of the invention

There is an increasing demand for frozen confection products which are natural and free of artificial emulsifiers and stabilisers, but at the same are low-fat products with rich and creamy texture. Low fat products are healthier but often lack good sensorial properties.

The prior art discloses different ways of improving the texture and sensorial properties of low fat frozen confection products.

For example low-temperature extrusion or low-temperature freezing is a technology that has been developed and used to confer enhanced organoleptic properties to frozen confection products.

EP 1 342 418 teaches a method for preparing a frozen ice cream with a pH ≤ 6.0 and comprising proteins without significantly changing the properties of said proteins during the preparation. The frozen ice cream contains an acid component but it is ensured that during preparation the protein does not react with the acid. According to this teaching, the contact time between the acid and the protein should be kept to a minimum in order to avoid any protein structural modification.

In WO 2012/016 854 is described a frozen aerated confection product comprising a partially coagulated protein system having a pH between 6.3 and 5.6 to improve textural and sensorial attributes of the confection. The coagulated protein system has been obtained by adding an acidifying agent, for example molasses, organic acids, such as citric acid, ethylenediaminetetraacetic acid (EDTA), or fruit derived acids.

However, there is a limit to use organic acids like citric acid in an edible product such as a frozen dairy dessert. Due to the strong aftertaste of citric acid, it limits the amounts used to adjust the pH below 6.0.

Furthermore, the use of citric acid gives mix processing limitations, such as high viscosity and possible fouling of the heat exchanger if the pH reaches below 5.8 and if the temperature goes above 85° C. In addition, citric acid is a chemically synthesized ingredient and would not qualify for "natural" claims.

EP 2206438 A1 describes a frozen confection or a beverage product which contains at least 400mg of theobromine and at least 40mg of caffeine per 100 grams of the product.

NL 1004105 C1 describes the use of goat's milk to make ice cream along with ingredients like coffee, cocoa, fruit juice, syrups, sugar etc. NL 1004105 C1 does not reference the specific use of non-alkalized cocoa nor is anything related to pH changing the functionality of the ice cream disclosed.

FR 2188967 A1 describes the use of juice from cocoa paste in sorbet. FR 2188967 A1 does not disclose the use of natural bean extract as an acidifying agent.

US 2006/088627 A1 describes an extraction process and the production of natural botanicals include cocoa and coffee bean extract. US 2006/088627 A1 does not refer the use of these ingredients in frozen confection.

US 2009/263556 A1 relates to a method for producing a soluble cocoa product from cocoa powder. US 2009/263556 A1 also describes an ice cream comprising a cocoa powder, and in particular to an ice cream comprising up to 15 wt % of a soluble cocoa powder, wherein said cocoa powder has a solubility in water of at least 50% at a temperature of less than 10 DEG C. US 2009/263556 A1 does not disclose the natural bean extract as an acidifying agent.

DE 102009048534 A1 discloses an emulsion using coffee flavors/oils which can be added to confections such as ice cream for flavoring.

US 4118521 A relates to the capturing of coffee essence during extraction and extending the shelf-life of the extraction. US 4118521 A does not related to frozen confection.

US 5338554 A describes the production of water soluble cocoa powder and the stability when mixed with liquid. US 5338554 A does not reference non-alkalized cocoa use in frozen confection for the use of stability.

WO 2004/032643 A1 refers to the use of coffee (NESCAFE™) in ice cream as having a better taste than other coffees through the use of a special extraction. WO 2004/032643 does not mention or make reference to pH of ice cream or texture improvement.

WO 2010/092091 A1, WO 2012/016853 A1, WO 2012/016816 A1, EP 1342418 A1 and WO 2012/016854 A1 refer to the use of citric acid, molasses or other fruit acids in frozen confection.

None of the prior art documents disclose the use of natural bean extract as an acidifying agent in a product to provide a specific pH range in the ingredient mix and change of structure of proteins in the mix.

Hence, there is a need for a milder and natural acidic solution for better control of processing parameters while obtaining a product with a rich, creamy texture.

Further, there is a need for a method of preparing frozen confection products where pH can be slowly lowered and where a product is prepared which has improved textural and sensorial properties but no sour or acidic aftertaste. Further, there is a need for frozen confections, in particular low fat products, which are free from artificial ingredients, but still have a smooth and creamy texture.

### Summary of the invention

The objective of the present invention relates to providing frozen confection products which have improved textural and sensorial properties such as a good creamy texture, and where the products do not have an acidic aftertaste.

It is a further object of the invention to provide frozen confection products with an increased protein aggregation for enhanced creaminess.

It is a further object of the invention to provide frozen confection products devoid of artificial ingredients especially, stabilizers and non-natural emulsifiers.

In particular, it is an object of the present invention to provide a frozen confection product having a controlled aggregation of milk protein in order to obtain a product with an improved rich and creamy texture. Furthermore, it is an object of the present invention to obtain a frozen confection product with naturally occurring acids in cocoa extracts, resulting in an improved texture but without impacting on the flavour profile, i.e. a clean taste and no sour or acidic after taste.

According to one aspect of the invention relates to a frozen confection product comprising natural bean extract as acidifying agent with a pH of 5.6 - 6.4.

A further aspect of the invention relates to a method of producing a frozen confection product, comprising the steps of:
a) providing an ingredient mix comprising one or more proteins;
b) adding natural bean extract to the ingredient mix
c) homogenizing the mix;
d) pasteurizing the mix;
e) freezing the pasteurized mix to form the frozen confection product;
f) optionally hardening the frozen confection product, and
wherein the natural cocoa bean extract is added to lower the pH of the ingredient mix to 5.6 - 6.4.

It has surprisingly been found that using natural, non-alkalized cocoa powder increases the viscosity of the ice cream mix and makes the processing of the ice cream mix difficult without further optimization. Without wishing to be bound by theory, it has been hypothesized that the observed protein aggregation happened due to the naturally occurring acids in natural cocoa beans.

It has been found while preparing a frozen confection product that the pH can be lowered by using natural bean extract and thus a controlled aggregation of proteins in the product can be obtained and the product will have an improved rich, smooth and creamy texture. At the same time, the use of natural bean extract will result in a product having a good taste which is not impaired by the addition of acid, i.e. the product has a desired taste and no after taste of acid. On the contrary, the use of citric acid to a pH below 6.0 will result in a product with a sour taste. A sour taste in ice cream is perceived negatively by consumers and is therefore to be avoided. Furthermore, no fouling of the process equipment was found while using natural bean extract as acidifying agent, controlling the process parameters obtained even at low pH (about pH 5.8) and at temperatures about 75°C.

Furthermore, by use of natural bean extract in preparing frozen desserts, the protein aggregation obtained is sufficient to provide a smooth and creamy texture to the confection product without the use of non-natural stabilizers or other conventional artificial additives used for this purpose. The use of natural bean extract in preparing frozen desserts makes it possible to provide a truly natural ice cream without the use of any non-natural ingredients and at the same time having improved textural and sensorial properties such as a rich, smooth and creamy texture without having an acidic aftertaste.

Another aspect of the present invention relates to a frozen confection product obtainable by said method and wherein the pH of the product is from 5.6 to 6.4.

### Brief description of the figures

Figure 1 shows the milk-fat aggregate size distribution of Ice cream samples with alkalized cocoa powder with citric acid and with non-alkalized cocoa powder without citric acid.
Figure 2 shows the milk fat aggregate size distribution of Ice cream sample without the use of cocoa powder and the citric acid.

### Detailed description of the invention

### Definitions

Prior to discussing the present invention in further details, the following terms and conditions will first be defined:
In the context of the present invention, mentioned percentages are weight/weight percentages unless otherwise stated.

The term "and/or" used in the context of the "X and/or Y" should be interpreted as "X", or "Y", or "X and Y".

Numerical ranges as used herein are intended to include every number and subset of numbers contained within that range, whether specifically disclosed or not. Further, these numerical ranges should be construed as providing support for a claim directed to any number or subset of numbers in that range. For example, a disclosure of from 1 to 10 should be construed as supporting a range of from 1 to 8, from 3 to 7, from 4 to 9, from 3.6 to 4.6, from 3.5 to 9.9, and so forth. All references to singular characteristics or limitations of the present invention shall include the corresponding plural characteristic or limitation, and vice versa, unless otherwise specified or clearly implied to the contrary by the context in which the reference is made.

Unless defined otherwise, all technical and scientific terms used herein have the same meaning as commonly understood by one of ordinary skill in the art (e.g. in frozen confection manufacture). Definitions and descriptions of various terms and techniques used in frozen confection manufacture are found in ice Cream, 6th Edition, Robert T Marshall, H. Douglas Goff and Richard W Hartel (2003), Kluwer Academic/Plenum Publishers.

As used in this specification, the words "comprises", "comprising", and similar words, are not to be interpreted in an exclusive or exhaustive sense. In other words, they are intended to mean "including, but not limited to.

The embodiments of the present invention described below are not intended to be exhaustive or to limit the invention to the precise forms disclosed in the following detailed description. Rather the embodiments are chosen and described so that others skilled in the art may appreciate and understand the principles and practices of the present invention.

### Frozen confection product:

In the context of the present invention the term "frozen confection product" means a confection product comprising ice crystals distributed throughout a sweetened and/or flavoured aqueous product and typically having a refreshing and cooling effect with a nice appearance.

Frozen confections include water in the form of ice crystals and are for consumption in a frozen or semi-frozen state, i.e. under conditions wherein the temperature of the product is less than 0°C, and preferably under conditions wherein the product comprises a significant amount of ice crystals.

Frozen confections may also be called "frozen confectioneries", "frozen confection products", "ice desserts" or "frozen desserts" and these terms may be used interchangeably.

In an embodiment of the invention the frozen confection product is an aerated frozen confection product, in particular an aerated frozen dairy dessert.

By the term "frozen aerated confection product" is meant any aerated frozen dessert.

In the context of the present invention, the term "aerated" relates to a product which have air cells distributed throughout the product. The air cells or air bubbles can be distributed throughout the product for example by extrusion or whipping air into the product. For example, one volume part of air whipped into one volume part of ice cream mix is equal to 100% overrun, as described in Marshall, Golf and Hartel.

In an embodiment of the present invention, the product has an overrun of at least 20%, such as in the range of 20-150%, preferably in the range of 80-130%, even more preferably in the range of 100-130%.

Overrun relates to the amount of air whipped in to an ingredient mix for preparing aerated products. Overrun is a term generally recognized for the skilled person within the field of ice cream production and in the present invention overrun is defined as the increase in volume, in percentage, of ice cream greater than the volume of the mix used to produce that ice cream. In other words, if you start off with 1 litre of mix and you make 2.0 litres of ice cream from that, you have increased the volume by 100% (i.e., the overrun is 100%).

In an embodiment of the invention, the frozen confection may be selected from the group of frozen dairy dessert, cultured frozen dairy dessert, ice cream, non-fat ice cream, low-fat ice cream, frozen yoghurt, milk shake, milk ice and sherbet.

In a preferred embodiment, the frozen confection product is an ice cream, which may be a full fat ice cream, low fat ice cream and fat free ice cream.

In an embodiment of the invention, the frozen confection product comprises from 0.5% to 20% fat by weight.

In another embodiment of the invention, the frozen confection product is a low-fat product and comprises at most 6% fat by weight.

In the context of the present invention, the term "fat" should be interpreted broadly and generally relates to one or more triglycerides independent of their melting temperature. The term "fat" comprises both triglycerides that are in liquid form at 25°C, as well as triglycerides that are in solid or semi-solid form at 25°C. Fatty acid triesters of the trihydroxy alcohol glycerol which are present in plant and animal tissues that can occur both as liquid or semiliquid or solid fat forms. The physical and chemical properties of fats and oils depend on the nature of the fatty acids present. Saturated fatty acids give higher melting fats and represent solid fats, for example lard and butter. Unsaturated fats lower the melting point of fatty acids and fats, e.g. plant oils contain large amounts of unsaturated fatty acids.

### Natural bean extract

As understood herein, natural bean extract may be selected from the group comprising natural cocoa bean extracts or natural coffee bean extracts or the combination thereof. Natural bean extract is any extract from beans from suitable plants such as coffee (*Coffea*), e.g. Arabica coffee (*Coffea arabica*)*,* Robusta coffee (*Coffea canephora*); and/or cocoa (*Theobroma cacao*) that may be used for recovering natural, acidic compounds.

### Natural cocoa bean extracts

Natural cocoa bean extracts are obtained from the cocoa bean. Cocoa extract or cocoa powder is obtained by grinding roasted, cleaned and deshelled cocoa beans to a paste, called cocoa mass or chocolate liquor, followed by extraction of part of the fat (cocoa butter) by pressing, leaving behind cocoa solids and a proportion of cocoa butter. The compressed mass left behind after this compressive defatting is called cocoa cake. The cocoa cake may then be further processed by pulverizing and/or grinding to produce cocoa powder. Preferably, at least 99.5% of the particles of cocoa powder are less than 75 microns in size (methodology OICC 38). It is preferred that a significant proportion of the cocoa powder has a particle size above 20 microns.

The used cocoa powder and/or cocoa cake is/are natural. Natural (non-alkalized) cocoa is acidic. Natural process cocoa powder (which is a current expression for cocoa powder that is not processed with alkali) is characterized by a pronouncedly tart and astringent taste and a light color.

The use of defatted cocoa powder and/or cocoa cake is preferred. The invention can use cocoa powder and cocoa cake having the fat content of from 10 to 22% fat (non-defatted cocoa powder or cocoa cake). Preferably, the cocoa powder or cocoa cake is defatted and contains from about 10 to about 12% fat. Cocoa powder and/or cocoa cake with a lower level of fat may be used, for example below 1 % fat, using alternative methods such as the use of supercritical carbon dioxide extraction. In general terms, a defatted cocoa powder or cocoa cake has about 18% fat or below. The product of the invention can contain 1-5 wt% natural cocoa bean extract.

Natural bean extracts are added to an ingredient mix for preparing frozen confection products comprising proteins will result in coagulation or aggregation of said proteins. It was however very surprisingly found that the use of natural bean extracts would increase the protein aggregation in frozen dairy desserts as compared to the use of other acids, such as citric acid.

Due to natural bean extract's very slow dissociation it aggregates proteins in a controlled way and even under storage. Further, because of natural bean extract's specific taste it can be added in amounts high enough to ensure optimal protein aggregation without giving the products obtained an off taste.

Protein aggregation has normally been perceived negatively, but it was surprisingly discovered that frozen desserts with controlled protein aggregation had an improved creamy texture than other products. This is due to controlled protein aggregation as well as increased water-binding, both of which in turn increase viscosity. No acid addition, such as citric acid, is required to adjust the pH as well as increased functionality of protein allows reduction or elimination of stabilizers. Thus, by the present invention, lower ingredients are needed to prepare a product which has a smooth creamy texture as compared to traditional products on the marked.

One advantage of using natural bean extract over other non-natural acid ingredients is that pH can be lowered while maintaining a good control over processing and the product attributes (taste and texture). Another advantage of using natural bean extract instead of other non-natural acid ingredients /citric acid is that the process parameters can be controlled when using natural bean extract at lower pH values and higher temperatures.

Since natural bean extract has mild acids with different dissociation constants, it can be added to an ingredient mix for preparing dairy frozen confection product in amount which will lower the pH of the product slowly as compared to when using industrial citric or acetic acid without impairing the taste of the product. If adding high amounts of non-natural /citric acid to a frozen dairy dessert the taste of the product will be impaired since the product will have a sour, acidic after taste. With the present invention, pH is lowered to a pH in the range of from 5.6 to 6.4 and still maintaining a creamy texture without any sour perception or taste.

In an embodiment of the present invention, the natural bean extract is added to the ingredient mix in an amount of 1 to 5% by weight, preferably in an amount of 2 to 5% by weight, even more preferably in an amount of 3 to 4% by weight.

### Protein:

The confection product according to the present invention comprises one or more types of proteins. The proteins may be selected from any dairy protein and plant protein.

In a preferred embodiment of the present invention, the protein is a dairy protein.

The proteins present in the ingredient mix to prepare the frozen confection product according to the present invention are partially aggregated due to the addition of natural bean extract.

In the present context, the term "controlled aggregation of proteins" means a complex or an aggregate resulting from at least casein micelle, whey proteins and fat present in the mix matrix. This controlled aggregation is induced by the presence of acids from natural bean extract combined with a heat treatment.

Preferably, the proteins are dairy proteins which are usually present in an ice cream mix and which comprises casein and/or whey proteins.

Most milk proteins (mainly caseins) in their native state remain in colloidal suspension form leading to minimal changes to mix viscosity (∼200-400 cp). However, when proteins are subjected to controlled exposure to known amounts of heat and acid (e.g., pH of 6.4 or less and pasteurization) they undergo aggreation. Aggregation is a state where the proteins are covalently and non-covalently linked as well as hydrated resulting in a three dimensional network (soft gel) causing increased mix viscosity (∼199-2400 cp). If the exposure of proteins to heat and acid is not controlled, this phenomenon could lead to precipitation (e.g. syneresis in yoghurt).

The controlled aggregation of proteins as a result from addition of natural cocoa bean extract and heat treatment is characterized by the presence of a significant volume density measured by the particle peak area which is greater than 40%, preferably greater than 50%, such as greater than 60%, even more preferably greater than 70%.

When proteins in an ice cream ingredient mix is manipulated by decreasing pH and exposing the mix to controlled heat, it is believed that protein aggregation occurs as heat unfolds whey proteins and interacts with kappa-casein from casein micelles. These unfolded proteins have the ability to increase the water holding capacity and form a unique 3-D network. Furthermore, protein aggregates form a network that is believed to bind water and entrap fat globules and increases mix viscosity to create a uniquely smooth, creamy texture that mimics the presence of higher fat levels.

Without wishing to be bound by any theory, it is believed that controlled aggregation of proteins within the ice cream mix is providing increased protein functionality that act as a natural stabilizer for the air cells and enable creation of a very fine and stable microstructure resulting in a smooth, rich and creamy product without the use of artificial or non-natural emulsifiers or stabilisers or similar additives. This enables designing of all natural products that are desirable for consumers who wish to minimize their intake of such artificial or non-natural additives.

With the use of natural bean extract, it is on the contrary to the use of other acids possible to lower pH without getting a sour taste. Further, it is possible to add enough natural bean extract to an ingredient mix to obtain controlled protein aggregation but without sour taste and precipitation.

### Method:

The method according to the present invention relates to preparing a frozen confection product by
a) providing an ingredient mix comprising one or more proteins;
b) adding natural cocoa bean extract to the ingredient mix;
c) homogenizing the mix;
d) pasteurizing the mix;
e) freezing the pasteurized mix to form the frozen confection product;
f) optionally hardening the frozen confection product, and
wherein the natural cocoa bean extract is added to lower the pH of the ingredient mix to 5.6 - 6.4.

The present invention provides an optimized method of preparing frozen confections by the controlled use of natural bean extract and controlled heat conditions. Natural cocoa bean extracts are preferably added that lowers the pH to 5.8 to 6.4 before processing depending on the amount of cocoa extract and the variety. The decrease of pH by addition of the mild acid from natural bean extracts and the exposure to controlled heat, result in protein aggregation and thus changes the structure in a frozen dessert, such as ice cream. The proteins will under acidic and subsequent heat conditions aggregate as heat unfolds the whey protein and acidic conditions destabilises casein micelles. These protein aggregates form a network that is believed to bind water and entrap fat globules and increases mix viscosity to create a uniquely smooth, creamy texture that mimics the presence of higher fat levels.

The inventors of the present invention have surprisingly found that the use of natural bean extract will enhance the controlled aggregation of proteins and thus the textural properties of a frozen dessert even at low fat and calorie contents as compared to the use of other acids, such as citric acid.

In a preferred embodiment of the invention the method relates to producing a frozen aerated confection product.

Continuous pasteurization is performed under standard conditions and may be carried out prior to or after homogenisation. Preferred pasteurization conditions include heating to a temperature between 75°C to 90°C, such as between 80°C to 90°C, even more preferably between 83°C to 87°C for a period of 30 to 120 seconds, preferably from 30 to 60 seconds.

Homogenisation can be done prior to pasteurization. It is preferably carried out under standard conditions, namely at a pressure of between 40 and 200 bars, preferably between 100 and 150 bars, more preferably between 120 and 140 bars.

The homogenised mix may then be cooled to around 2 to 8°C by known means. The mix may further be aged for 4 to 72 hours at around 2 to 6°C with or without stirring. Optionally, the addition of flavourings, colourings, sauces, inclusions etc. may be carried out after ageing and before freezing. If flavourings, colourings, sauces, inclusions etc. are added, these are preferably selected from natural ingredients only.

In the next step, the mix is frozen. In an embodiment of the invention the freezing is made while aerating the pasteurized mix. In a preferred embodiment, the mix may be cooled to a temperature below -3°C, preferably between -3 and -10°C, even more preferably between at about -4.5 to -8°C with stirring and injection of a gas to create a desired overrun.

In an embodiment according to the present invention, the freezing step is in combination with aerating the mix to an overrun at least 20%. The aerating may be performed to an overrun from 20 to 150%, preferably from 50 to 140%, such as from 80-135%, and even more preferably from 100 to 130%.

The aerated mix is then subjected to freezing either by using conventional freezing equipment or by using a low temperature extrusion system. The frozen mix is then packaged and stored at temperatures colder than -20°C, where it will undergo hardening step during storage. Alternatively, it can be hardened by accelerated hardening step, for example via a hardening tunnel, carried out at a temperature between -20°C to -40°C for a sufficient time to harden the product.

The method of the invention lends itself to the manufacture of frozen confections which are more stable at the necessary storage temperatures and have superior organoleptic and textural properties.

### The freezer:

In an embodiment according to the present invention, the freezing in step e) is made by using a standard continuous industry freezer.

In a preferred embodiment of the invention, the primary freezing step in step e) is followed by a low temperature freezing process. The low temperature freezing, may also be termed low temperature extrusion, is reducing the product temperature to below -10°C, preferably between -12°C and -18°C. The screw extruder may be such as that described in WO 2005/070225. The extrusion may be performed in a single or multi screw extruder.

A product prepared by the present method which further has been subjected to low temperature freezing or low temperature extrusion is thus another object of the present invention.

In an embodiment of the invention, the low temperature freezing is performed in a single or multi-screw extruder.

Low temperature extrusion is a known method which imparts to the final product a specific and advantageous microstructure. For instance, ice crystal size and air bubble size tend to be smaller than in traditional manufacturing processes. On the other hand, the size of fat globules does not change significantly when low temperature extrusion is used.

The method according to the present invention using natural cocoa bean extract will result in products with an even better structure with low temperature freezing in addition to conventional freezing than compared to existing low temperature extruded products.

In a preferred embodiment of the invention, the freezing is made first through a primary conventional freezer and then subsequently through a secondary low temperature freezer to achieve a creamy frozen dessert.

Products known which are made by low temperature freezing are described in US 2007/ 0 196 553, the content of which is here included by reference. For instance, ice crystal size and air bubble size tend to be smaller than in traditional manufacturing processes. Ice crystals, air cells, fat globules and agglomerates thereof shall be in a specific diameter in order to enhance positive sensory characteristics and stability during storage.

The products obtained by the method according to the present invention, i.e. acidification with natural cocoa or coffee bean extract, and preferably in combination with low temperature freezing have a smoother mouth feel and have particular appealing textural and organoleptic properties, similar to low temperature extruded products. Besides, the frozen confection product prepared by the method of the present invention is free of non-natural stabilizers, and non-natural emulsifiers.

### Product:

In an aspect the present invention relates to a frozen confection product obtainable by the method according to the present invention and wherein the pH of the product is from 5.6 to 6.4.

In a preferred embodiment the product is an aerated frozen confection product.

According to a particular embodiment of the present invention, the product comprises fat in an amount of 0-20% by weight, preferably 0-13%, milk-solid non-fat in an amount of 5-15% by weight, preferably 10-13%, a sweetening agent in an amount of 5-30%. Preferably, the product comprises 0.5 to 5.5% fat which is representative of a low-fat or non-fat product.

In the context of the present invention, the term "sweetening agent" means any compound bringing sweetness to the final product. Further, the sweetening agent enhances the flavour of the frozen confection prepared from the composition. Sweetening agent includes natural sugars like cane sugar, beet sugar, molasses, other plant derived nutritive sweeteners and non-nutritive sweeteners.

Examples of sweetening agent are sugar, sugar alcohol, natural sweetener, artificial sweetener and combinations thereof.

The product may additionally comprise flavourings, colourings, water or any mixtures thereof. Such flavourings or colourings, when used, are preferably selected from natural ingredients. These are used in conventional amounts which can be optimized by routine testing for any particular product formulation.

According to a specific embodiment of the invention, the product essentially consists of natural ingredients.

The term "essentially consist" means that at least 95% of the ingredients have to be natural, such as at least 97%, preferably at least 98%, even more preferably at least 99%.

The term "natural ingredients" refer in the context of the present invention to ingredients of natural origin. These include ingredients which come directly from the field, animals, etc. or which are the result of a physical or microbiological / enzymatic transformation process. These therefore do not include ingredients which are the result of a chemical modification process.

In another embodiment of the invention, the product is essentially or completely free of any artificial or non-natural emulsifier or stabilizer.

Examples of artificial and non-natural ingredients which are avoided in a particular embodiment of the invention include for example the following emulsifiers; mono- and diglyceride of fatty acids, acid esters of mono- and diglycerides of fatty acids such as acetic, lactic, citric, tartaric, mono- and diacetyl tartaric acid esters of mono- and diglycerides of fatty acids, mixed acetic and tartaric acid esters of mono- and diglycerides of fatty acid, sucrose esters of fatty acids, polyglycerol esters if fatty acids, polyglycerol polyricinoleate, polyethylene sorbitan mono-oleate, polysorbate 80 and, chemically extracted lecithins.

The term "artificial emulsifiers" may also be referred to as synthetic emulsifiers or non-natural emulsifiers and the terms may be used interchangeably.

Chemically modified starches which are used in the art as stabilizers are also preferably avoided. These include for example modified starch, monostarch phosphate, distarch phosphate, phosphate or acetylated distarch phosphate, acetylated starch, acetylated distarch afipate, hydroxyl propyl starch, hydroxypropyl distarch phosphate, acetylated modified starch.

The products of the present invention are preferably essentially free of the preceding synthetic esters and modified starches.

"Essentially free" means in the context of the present application, that these material are not intentionally added for their conventional property imparting abilities, e.g. stabilizing, although there could be unintended minor amounts present without detracting from the performance of the products. Generally and preferably, the products of the invention will not contain any non-natural materials. By the term "essentially or completely free" is therefore meant that the product comprise 1% by weight or less of a given compound.

In another embodiment of the invention, the product is selected from the group of ice cream, milk ice, non-fat ice cream, low fat ice cream, frozen yoghurt, frozen dairy dessert and cultured frozen dairy dessert.

It should be noted that embodiments and features described in the context of one of the aspects of the present invention also apply to the other aspects of the invention.

The invention will now be described in further details in the following non-limiting examples.

### Examples

### Example 1: A frozen dairy dessert with natural (non-alkalized) cocoa bean extract as acidifying agent

| Ingredient | Wt% of final product |
|---|---|
| Fat | 10-11 |
| MSNF | 10 -12 |
| Sugar | 18-22 |

| | |
|---|---|
| Natural (non-alkalized) cocoa bean extract | 3.3 to 3.9% |

The frozen dairy dessert was prepared by mixing the ingredients mentioned above and then adding 3.3 to 3.9 wt% natural (non-alkalized) cocoa extract in a powder form to reduce pH to 5.8 - 6.0. No other acidifying agent was added to the mix. Then, the acidified ingredient mix was homogenized at stage one at 1500 psi and stage two at 500 psi and subsequently pasteurized at 82°C for 90 seconds. The pasteurized mix was then frozen by using a combination of a standard continuous industry freezer or low temperature freezing.

### Example 2: A frozen dairy dessert with alkalized cocoa bean extract

| Ingredient | Wt% of final product |
|---|---|
| Fat | 10-11 |
| MSNF | 10-12 |
| Sugar | 18-22 |

| | |
|---|---|
| Alkalized cocoa bean extract | 3.6 |

The frozen dairy dessert was prepared by mixing the ingredients mentioned above and then add 3.6%% by weight alkalized cocoa bean extract and added with 0.1% citric acid to lower the pH. The acidified ingredient mix were then homogenized at a stage one at 1500 psi and at stage two at 500 psi and subsequently pasteurized at 82°C for 90 seconds. The pasteurized mix was then frozen by using a combination of a conventional freezer and a low temperature freezing.

### Volume-based particle size distribution and volume mean diameter

In this study the frozen desserts of Examples 1 and 2, are compared to see the effects of industrial acid and natural acids from non-alkalized cocoa powder.

The difference in frozen dairy desserts acidified with natural, non-alkalized cocoa bean extract, with unnatural acid and prepared with alkalized cocoa bean extract respectively have also been evaluated by measuring particle volume distribution with a laser diffraction particle size analyser.

### Viscosity of Ice cream mixes as influenced by the alkalized cocoa with citric acid and percentages of Non-alkalized cocoa extract

| Sample | | Calculated viscosity at 4°C | | "Read" viscosity | | Measured temperature | |
|---|---|---|---|---|---|---|---|
| | | T0 | T24H | T0 | T24H | T0 | T24H |
| 1. | Alkalized cocoa bean extract (3.6%) with 0.1% citric acid | 352 | 322 | 301 | 317 | 9.5 | 4.6 |
| 2. | Non-alkalized cocoa bean extract* (3.6%) | 390 | 372 | 333 | 362 | 9.5 | 5.0 |
| 3. | Non-alkalized cocoa bean extract* (3.9%) | 417 | 404 | 352 | 391 | 9.9 | 5.2 |
| 4. | Non-alkalized cocoa bean extract* (3.3%) | 330 | 336 | 277 | 317 | 10.2 | 6.1 |

| | | | | | | | |
|---|---|---|---|---|---|---|---|
| *Citric acid was not added in the mix; Viscosity was measures using Brookfield LV62. | | | | | | | |

A product comprising natural, non-alkalized cocoa bean extract prepared by the method described above (using heat and pre-acidification step) has been found to provide similar effects as the product prepared by using unnatural acids. The viscosity increase proves that the texture is similar as well as the aggregate size detection using Malvern. The method includes particle size distribution as measured by diluting approximately 2.5g mix or frozen product in 10 parts by weight de-ionized water (approx. 25g) and mixed until uniformly distributed. If frozen, the product will melt during this step. Stirring rate is set to 1600 rpm. The diluted mixture is then added slowly to the dispersion module of the particle size analyser until the optimal concentration is reached, as indicated by the degree of light obscuration (17-20%). The sample is allowed to circulate through the measuring system for an additional 30 seconds before starting the measurement.

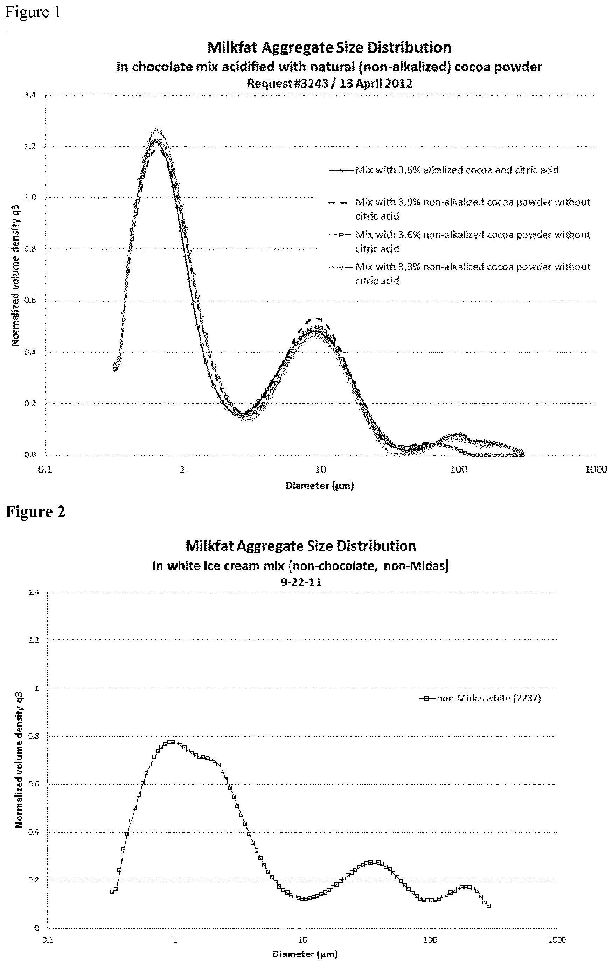

The milk fat aggregate size distribution (Figures 1 and 2) proves that natural acidification yields similar results to the use of unnatural acids.

In the below table are the volume fraction (%) of fat droplets and clusters whose diameter is above 2,28 µm, an indication of fat clustering. Also shown is the volume-based mean diameter of the fat droplets and clusters, from a sample of the frozen dairy dessert given in example 1 and 2 respectively.

| Type of product | Volume fraction (%) >2,28 µm | D (3, 2) Volume/Surface Mean |
|---|---|---|
| Conventional White Mix | 48.3 | 0.48 |
| Non-alkalized cocoa mix | 34.9 | 1.02 |

From the above table, it is disclosed that the volume fraction, above 2.28 µm diameter, and volume mean diameter of a product prepared by using natural, non-alkalized cocoa bean extract as acidifying agent are much larger than volume mean diameter of a product prepared without the use of the current method (without heat and pre-acidification step). This indicates that more protein is getting aggregated in products according to example 1 as compared to products according to example 2. Thus an improved network is obtained in products acidified with natural, non-alkalized cocoa bean extract as compared to products prepared without the use of the current method (without heat and pre-acidification step or conventional).

### Laboratory analysis of Titratable Acidity (TA) of natural non-alkalized cocoa powder

- Samples were 2.5g cocoa powder in 25g DI water, agitated for 30min to allow acids to dissolve
- Centrifuge was done at 5000rpm for 10min
- Collection of liquid portion (supernatant)
- Re-centrifuge at 5000rpm for 15min
- Run TA (9.62 and 9.57g diluted to 5:1)
- Alkalized cocoa bean extract sample: pH = 7.12; TA = 0.0207 %
- Natural non-alkalized cocoa bean extract sample: pH = 5.91; TA = 0.1623 % (8x)

Natural cocoa contains approx. 4 % of organic acids:
- Acetic acid: 0.6 %
- Lactic acid: 0.4 %
- Citric acid: 2.5 %
- Oxalic acid: < 0.5 %

## Claims

1. A frozen confection product comprising natural bean extract as acidifying agent with a pH of 5.6 - 6.4.

2. The product according to claim 1, wherein the natural bean extract is cocoa bean extracts, coffee bean extract or a combination thereof.

3. The product according to claims 1 or 2, wherein the amount of the natural bean extract is 1-5 % by weight.

4. The product according to any of the claims 1 to 3, wherein the product is completely free of any artificial or non-natural emulsifier or stabilizer.

5. A method of producing a frozen confection product, comprising the steps of:
a) providing an ingredient mix comprising one or more proteins;
b) adding natural bean extract to the ingredient mix:
c) homogenizing the mix;
d) pasteurizing the mix;
e) freezing the pasteurized mix to form the frozen confection product;
optionally hardening the frozen confection product and wherein the natural cocoa bean extract is added to lower the pH of the ingredient mix to 5.6 - 6.4.

6. The method according to claim 5, wherein the mix is pasteurized at a temperature from 75°C to 95°C for 30 to 120 seconds.

7. The method according to any of the claims 5 to 6, wherein the freezing under step e) is in combination with aerating the mix to an overrun of at least 20%.

8. The method according to any of the claims 5 to 7, wherein the natural cocoa bean extract is added to the ingredient mix in an amount of 1-5 % by weight.

9. The method according to any of the claims 5 to 8, wherein the freezing is made by using a standard continuous industry freezer.

10. The method according to any of the claim 5 to 9, wherein step e) is followed by a low temperature freezing step performed by a single or multi-screw extruder.

11. The method according to any of claims 5 to 10, wherein the method further comprises a step of adjusting the pH of the mix after pasteurization, in preferably adjusting to a pH in the range of 5.6 -6.4.

12. The method according to any of claims 5 to 11, wherein the ingredient mix further comprises fat in an amount of 0-20% by weight, milk solid non-fat in an amount of 5-15% by weight, and a sweetening agent in an amount of 5-30% by weight.

13. The method according the claim 12, wherein the ingredient mix further comprises flavours, colourings, proteins, water or any mixture thereof.

14. A frozen confection product obtainable by the method according to any of the claims 5 to 13 and wherein the pH of the product is from 5.6 to 6.4.

15. The product according to claim 14, wherein the product is selected from the group of ice cream, non-fat ice cream, low fat ice cream, milk ice, frozen yoghurt, frozen dairy dessert and cultured frozen dairy dessert.

## Patentansprüche

1. Gefrorenes Süßwarenprodukt, umfassend natürlichen Bohnenextrakt als Säuerungsmittel mit einem pH-Wert von 5,6 bis 6,4.

2. Produkt nach Anspruch 1, wobei der natürliche Bohnenextrakt Kakaobohnenextrakte, Kaffeebohnenextrakt oder eine Kombination davon ist.

3. Produkt nach einem der Ansprüche 1 oder 2, wobei die Menge des natürlichen Bohnenextrakts 1 bis 5 % Gew.-% beträgt.

4. Produkt nach einem der Ansprüche 1 bis 3, wobei das Produkt vollständig frei von jeglichem künstlichen oder nicht-natürlichen Emulgator oder Stabilisator ist.

5. Verfahren zum Herstellen eines gefrorenen Süßwarenprodukts, das folgende Schritte umfasst:
a) Bereitstellen einer Inhaltsstoffmischung, die ein oder mehrere Proteine umfasst;
b) Hinzufügen von natürlichem Bohnenextrakt zu der Inhaltsstoffmischung:
c) Homogenisieren der Mischung;
d) Pasteurisieren der Mischung;
e) Gefrierenlassen der pasteurisierten Mischung, um das gefrorene Süßwarenprodukt zu bilden; und gegebenenfalls Aushärten des gefrorenen Süßwarenerzeugnisses, und wobei der natürliche Kakaobohnenextrakt zugegeben wird, um den pH-Wert der Inhaltsstoffmischung auf 5,6 bis 6,4 zu senken.

6. Verfahren nach Ansprüch 5, wobei die Mischung bei einer Temperatur von 75 °C bis 95 °C für 30 bis 120 Sekunden pasteurisiert wird.

7. Verfahren nach einem der Ansprüche 5 bis 6, wobei das Gefrierenlassen in Schritt e) in Kombination mit einem Beaufschlagen der Mischung mit Luft auf einen Lufteinschlag von mindestens 20 % erfolgt.

8. Verfahren nach einem der Ansprüche 5 bis 7, wobei der natürliche Kakaobohnenextrakt der Inhaltsstoffmischung in einer Menge von 1 bis 5 Gew.-% zugegeben wird.

9. Verfahren nach einem der Ansprüche 5 bis 8, wobei das Gefrierenlassen unter Verwendung einer standardmäßigen, kontinuierlichen Industriegefriervorrichtung durchgeführt wird.

10. Verfahren nach einem der Ansprüche 5 bis 9, wobei auf Schritt e) ein Tieftemperaturgefrierschritt folgt, der durch einen Einzel- oder Mehrschneckenextruder durchgeführt wird.

11. Verfahren nach einem der Ansprüche 5 bis 10, wobei das Verfahren ferner einen Schritt zum Einstellen des pH-Werts der Mischung nach der Pasteurisierung, bevorzugt zum Einstellen auf einen pH-Wert im Bereich von 5,6 bis 6,4, umfasst.

12. Verfahren nach einem der Ansprüche 5 bis 11, wobei die Inhaltsstoffmischung ferner Fett in einer Menge von 0 bis 20 Gew.-%, fettfreie Milchtrockenmasse in einer Menge von 5 bis 15 Gew.-% und ein Süßungsmittel in einer Menge von 5 bis 30 Gew.-% umfasst.

13. Verfahren nach Anspruch 12, wobei die Inhaltsstoffmischung ferner Aromen, Farbstoffe, Proteine, Wasser oder eine Mischung davon umfasst.

14. Gefrorenes Süßwarenprodukt, das durch das Verfahren nach einem der Ansprüche 5 bis 13 erhältlich ist, und wobei der pH-Wert des Produkts im Bereich von 5,6 bis 6,4 liegt.

15. Produkt nach Anspruch 14, wobei das Produkt ausgewählt ist aus der Gruppe aus Eiscreme, fettfreier Eiscreme, Eiscreme mit niedrigem Fettgehalt, Milcheis, gefrorenem Joghurt, gefrorenem Milchproduktdessert und gefrorenem fermentierten Milchproduktdessert.

## Revendications

1. Produit de confiserie congelé comprenant un extrait naturel de fève en tant qu'agent acidifiant avec un pH de 5,6 à 6,4.

2. Produit selon la revendication 1, dans lequel l'extrait naturel de fève est des extraits de fève de cacao, un extrait de fève de café ou une combinaison de ceux-ci.

3. Produit selon les revendications 1 ou 2, dans lequel la quantité de l'extrait naturel de fève va de 1 à 5 % en poids.

4. Produit selon l'une quelconque des revendications 1 à 3, dans lequel le produit est complètement exempt d'un quelconque émulsifiant ou stabilisant artificiel ou non naturel.

5. Procédé de production d'un produit de confiserie congelé, comprenant les étapes de :
a) fourniture d'un mélange d'ingrédients comprenant une ou plusieurs protéines ;
b) ajout d'extrait naturel de fève au mélange d'ingrédients :
c) homogénéisation du mélange ;
d) pasteurisation du mélange ;
e) congélation du mélange pasteurisé pour former le produit de confiserie congelé ; durcissement facultatif du produit de confiserie congelé et dans lequel l'extrait naturel de fève de cacao est ajouté pour abaisser le pH du mélange d'ingrédients à 5,6 à 6,4.

6. Procédé selon la revendication 5, dans lequel le mélange est pasteurisé à une température allant de 75 °C à 95 °C pendant 30 à 120 secondes.

7. Procédé selon l'une quelconque des revendications 5 à 6, dans lequel la congélation selon l'étape e) est en combinaison avec une aération du mélange à un foisonnement d'au moins 20 %.

8. Procédé selon l'une quelconque des revendications 5 à 7, dans lequel l'extrait naturel de fève de cacao est ajouté au mélange d'ingrédients en une quantité de 1 à 5 % en poids.

9. Procédé selon l'une quelconque des revendications 5 à 8, dans lequel la congélation est faite en utilisant un congélateur industriel continu standard.

10. Procédé selon l'un quelconque parmi la revendication 5 à 9, dans lequel l'étape e) est suivie d'une étape de congélation à basse température mise en oeuvre par une extrudeuse à simple vis ou à plusieurs vis.

11. Procédé selon l'une quelconque des revendications 5 à 10, dans lequel le procédé comprend en outre une étape d'ajustement du pH du mélange après pasteurisation, en ajustant de préférence à un pH dans la plage de 5,6 à 6,4.

12. Procédé selon l'une quelconque des revendications 5 à 11, dans lequel le mélange d'ingrédients comprend en outre de la matière grasse en une quantité de 0 à 20 % en poids, des solides de lait exempts de matières grasses en une quantité de 5 à 15 % en poids, et un agent édulcorant en une quantité de 5 à 30 % en poids.

13. Procédé selon la revendication 12, dans lequel le mélange d'ingrédients comprend en outre des arômes, des colorants, des protéines, de l'eau ou n'importe quel mélange de ceux-ci.

14. Produit de confiserie congelé pouvant être obtenu par le procédé selon l'une quelconque des revendications 5 à 13 et dans lequel le pH du produit va de 5,6 à 6,4.

15. Procédé selon la revendication 14, dans lequel le produit est choisi dans le groupe de crème glacée, crème glacée exempte de matières grasses, crème glacée à faible teneur en matière grasse, yaourt congelé, dessert lacté congelé et dessert lacté congelé fermenté.
